# EUROPEAN PATENT SPECIFICATION

(11) **EP 3 350 638 B1**
(45) Date of publication and mention of the grant of the patent: **19.05.2021**
(21) Application number: 16775330.0
(22) Date of filing: 16.09.2016
(51) Int. Cl.: G02B 6/38

(54) **WIPING SYSTEM**
WISCHSYSTEM
SYSTÈME D'ESSUYAGE

(30) Priority: 16.09.2015 CN 201510589615
(43) Date of publication of application: 25.07.2018
(73) Proprietor: TE Connectivity Corporation, Berwyn, PA 19312 (US); Tyco Electronics Corporation, Berwyn, PA 19312 (US); Innogetic Technology Co., Ltd., Zhuhai (CN)
(72) Inventor: XIN, Liming, Shanghai (CN); HU, Lvhai, Shanghai (CN); LIU, Yun, Shanghai (CN); ZHANG, Dandan, Shanghai (CN); LU, Roberto Francisco-Yi, Berwyn, Pennsylvania 19312 (US); ZHOU, Lei, Shanghai (CN); WONG, Kok Wai, Zhuhai (CN)
(74) Representative: Grünecker Patent- und Rechtsanwälte PartG mbB
(86) International application number: PCT/IB2016/055548
(87) International publication number: WO 2017/046768

(56) References cited:
- JP-A- 2002 066 895
- JP-A- 2002 350 679
- JP-A- 2003 175 448
- US-A1- 2006 035 562
- US-B1- 6 179 689

## Description

### BACKGROUND OF THE INVENTION

### Field of the Invention

The present invention relates to a wiping system, more particularly, relates to a wiping system adapted to wipe a front end face of a fiber optic ferrule.

### Description of the Related Art

A fiber optic connector generally comprises a housing and a fiber optic ferrule mounted in the housing. The fiber optic ferrule is the most important part of the fiber optic connector. The fiber optic ferrule generally comprises a ferrule and an optical fiber inserted into a bore of the ferrule. A front end of the optical fiber protrudes from a front end face of the ferrule by a predetermined distance. The optical fiber is fixed in the bore of the ferrule by an adhesive filled in the bore of the ferrule.

After the optical fiber is fixed in the bore of the ferrule, it needs to process the front end face of the fiber optic ferrule. The processing of the front end face of the fiber optic ferrule generally comprises steps of: polishing the front end face of the fiber optic ferrule; cleaning the polished fiber optic ferrule to remove the polishing power dust from the fiber optic ferrule; drying the cleaned fiber optic ferrule; and wiping the front end face of the dried fiber optic ferrule, so as to wipe off the dust from the front end face of the fiber optic ferrule.

In the prior art, the wiping to the front end face of the fiber optic ferrule generally is performed by manual, which is low efficiency. Furthermore, the fiber optic ferrule is easily damaged during wiping the front end face of the fiber optic ferrule by manual.

JP-A-2002/066895 provides a polishing machine to perform high-precise polishing processing, the working efficiency is excellent, and be suitable for use at a working site. A plurality of tape-form polishing sheets juxtaposed with each other are capable of being carried over a platen. A work to be polished support body to support a work to be polished is slid in a direction vertical to the carry directions of a plurality of the tape-form polishing sheets and the work to be polished is positioned on one of a plurality of tape-form polishing sheets. The work to be polished support body and the platen support body are caused to integrally effect a periodic motion, such as circular motion.

JP-A-2002/350679 provides a technology which eliminates the need for exact work and a drying time and makes it possible to polish a plurality of end surface parts at the same time without wasting, specially, a polishing sheet. This device is equipped with a holder which arranges a plurality of optical fiber ferrule end surface parts at a polishing position, the polishing sheet which has its surface brought into contact with the ferrule end surface parts at the polishing position, an air cylinder which vibrates the polishing sheet in one direction so that the ferrule end surface parts slide on the surface of the polishing sheet, and a speed control motor which sends the polishing sheet at right angles to the vibration direction, and the polishing sheet is rolled and wound and has its payoff part arranged on one side of the polishing position and its take-up part arranged on the other side.

JP-A-2003/175448 provides a machining apparatus capable of polishing the end face of a rod of optical fiber, ferrule or the like. This rod end face machining apparatus comprises a tape-like polishing film, a delivering and winding mechanism (a delivering reel, a winding reel, a motor and guide rollers) for moving the polishing film, a rotating table consisting of a pressing section for pressing the polishing film against the end of the rod to be polished, and a clamping section for fixing the rod. The whole rotating table is rotated around a contact section between the polishing film and the rod.

The device of US-B1-6179689 is made up by: a stage having an upper surface for which a section taken at a right angle to the longitudinal direction describes a concave arc; abrasive tape arranged on the stage at a right angle to the longitudinal direction; a mechanism for driving the abrasive tape; a mechanism that applies pressure and places the end face of the workpiece in contact with the abrasive tape such that the center of the radius of curvature of the section of the stage coincides with the center of rotation of a rod-like workpiece; a mechanism for giving the workpiece a reciprocating movement over the surface depression in the longitudinal direction of the stage while rotating the workpiece; arid a water-holding material that contains a grinding fluid that produces a thin and uniform film of grinding fluid on the surface of the abrasive tape.

US-A1-2006/0035562 discloses a system for polishing optical connectors describing a way of delivering water to the connectors being polished.

### SUMMARY OF THE INVENTION

The present invention has been made to overcome or alleviate at least one aspect of the above mentioned disadvantages.

According to an object of the present invention, there is provided a wiping system adapted to efficiently wipe a fiber optic ferrule and reliably ensure the quality of the fiber optic ferrule without damaging the fiber optic ferrule.

According to an aspect of the present invention, there is provided a wiping system, comprising: a support table; a conveying unit configured to convey a wiping belt onto the support table; a carrier holding device configured to hold a carrier on which a plurality of fiber optic ferrules are mounted; a carrier pressing device configured to press the carrier on the support table, so that a front end faces of the fiber optic ferrules mounted on the carrier directly contact the wiping belt on the support table; and a first base on which the support table is fixed. The carrier holding device and the carrier pressing device are slidably mounted on the first base, so that the carrier pressed on the support table is movable back and forth relative to the support table in a first horizontal direction, so as to wipe the front end faces of the fiber optic ferrules by the wiping belt on the support table.

According to an exemplary embodiment of the present invention, a first rail extending in the first horizontal direction and a first sliding block matched with the first rail are provided on the first base; and the carrier holding device and the carrier pressing device are mounted on the first sliding block, so as to slide along the first rail together with the first sliding block.

According to another exemplary embodiment of the present invention, wherein the conveying unit comprises: a driven shaft on which an unused portion of the wiping belt is wound; a driving shaft on which an used portion of the wiping belt is wound; a plurality of tightening rollers adapted to tighten the wiping belt between the driven shaft and the driving shaft; and a driver adapted to drive the driving shaft to rotate. The support table is located between the driving shaft and the driven shaft. When the driving shaft is rotated by the driver, the unused wiping belt is released from the driven shaft and is conveyed to the support table, and the used wiping belt is wound on the driving shaft.

According to another exemplary embodiment of the present invention, the conveying unit further comprises a damper connected to the driven shaft and adapted to exerted a damping moment to the driven shaft, so as to prevent the driven shaft from being rotated due to a pulling force produced during wiping the fiber optic ferrules, such that the wiping belt on the support table is kept in a static state during wiping the fiber optic ferrules.

According to another exemplary embodiment of the present invention, the driver for driving the driving shaft to rotate is fixedly mounted on the first base; and the wiping system further comprises a second base on which the driven shaft and the damper are slidably mounted.

According to another exemplary embodiment of the present invention, a second rail extending in a second horizontal direction perpendicular to the first horizontal direction and a second sliding block mated with the second rail are provided on the second base; and the driven shaft and the damper are mounted on the second sliding block, so as to slide along the second rail together with the second sliding block.

According to another exemplary embodiment of the present invention, the wiping system further comprises a deviation correcting device configured to prevent the conveyed wiping belt from being deviated from a predetermined position in the second horizontal direction.

According to another exemplary embodiment of the present invention, the deviation correcting device comprises: a position sensor adapted to detect an actual position of the conveyed wiping belt in the second horizontal direction; and a position adjusting mechanism configured to adjust the position of the driven shaft based on an error between the actual position and the predetermined position of the wiping belt until the error is equal to zero.

According to another exemplary embodiment of the present invention, the position adjusting mechanism is mounted on the second base and connected to the second sliding block, so as to drive the second sliding block to slide along the second rail.

According to another exemplary embodiment of the present invention, the plurality of tightening rollers comprise a first tightening roller supported on the first base and a second tightening roller supported on the second base.

According to another exemplary embodiment of the present invention, the driving shaft comprises an inner shaft connected to an output shaft of the driver and an outer tube sleeved on the inner shaft; the inner shaft and the outer tube are detachably locked together by a locking member.

According to another exemplary embodiment of the present invention, the wiping system further comprises a driving mechanism configured to drive the first sliding block to slide along the first rail.

According to another exemplary embodiment of the present invention, the carrier holding device comprises: a carrier holder configured to hold the carrier thereon; and a lift mechanism configured to move the carrier holder up and down in a vertical direction.

According to another exemplary embodiment of the present invention, the carrier pressing device comprises: a pressing head adapted to be pressed on the carrier holder; and a force exerting mechanism adapted to exert a predetermined pressing force on the pressing head.

According to another exemplary embodiment of the present invention, the carrier pressing device further comprises a pressure sensor provided between the pressing head and the force exerting mechanism and adapted to detect a pressing force exerted by the force exerting mechanism.

According to another exemplary embodiment of the present invention, a pressing plate is provided on an end of the force exerting mechanism, and the pressure sensor is provided between the pressing plate and the pressing head, such that the pressing force exerted by the force exerting mechanism is transferred onto the pressing head through the pressing plate and the pressure sensor.

According to another exemplary embodiment of the present invention, the lift mechanism and the force exerting mechanism are mounted on the first sliding block.

According to another exemplary embodiment of the present invention, the wiping system further comprises a support frame mounted on the first sliding block, wherein the force exerting mechanism is connected to the support frame.

According to another exemplary embodiment of the present invention, the wiping system further comprises a cleaning liquid injection device configured to spray a cleaning liquid onto the wiping belt on the support table.

According to another exemplary embodiment of the present invention, the cleaning liquid injection device comprises: a support bracket mounted on the first sliding block; a cleaning liquid spray head mounted on the support bracket; and a spray head driver adapted to drive the cleaning liquid spray head to spray the cleaning liquid to the wiping belt.

In the above various exemplary embodiments of the present invention, the wiping system may realize the automatic wipe processing of the fiber optic ferrules in batch, improving the wiping efficiency of the fiber optic ferrules. Furthermore, it may effectively protect the fiber optic ferrules from being damaged during wiping the fiber optic ferrules, ensuring the quality of the fiber optic ferrules.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative perspective view of a wiping system according to an exemplary embodiment of the present invention; and
Fig.2 is a vertical cross section view of the wiping system shown in Fig.1.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a wiping system, comprising: a support table; a conveying unit configured to convey a wiping belt onto the support table; a carrier holding device configured to hold a carrier on which a plurality of fiber optic ferrules are mounted; a carrier pressing device configured to press the carrier on the support table, so that a front end faces of the fiber optic ferrules mounted on the carrier directly contact the wiping belt on the support table; and a first base constructed to mount the support table. The carrier holding device and the carrier pressing device are slidably mounted on the first base, so that the carrier pressed on the support table is movable back and forth relative to the support table in a first horizontal direction, so as to wipe the front end faces of the fiber optic ferrules by means of the wiping belt on the support table.

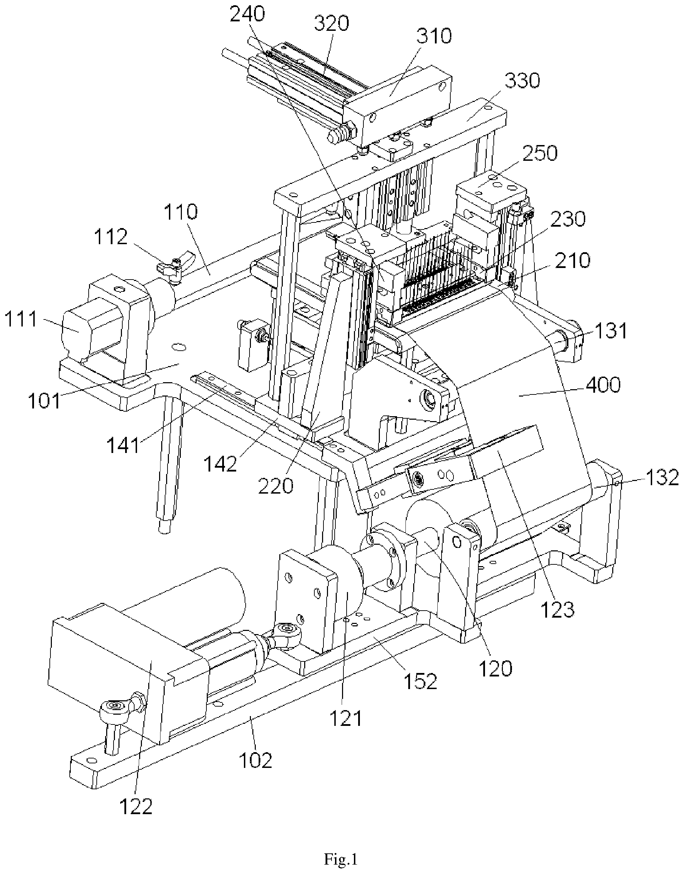

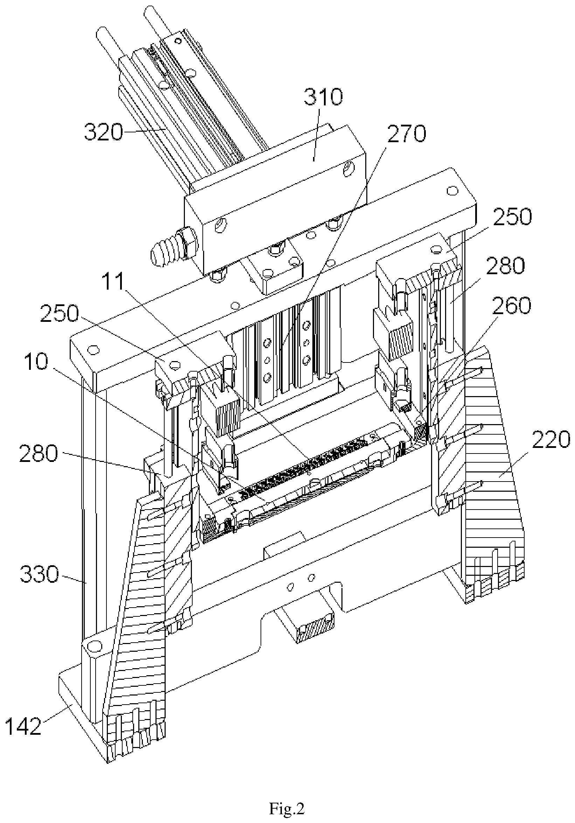

Fig.1 is an illustrative perspective view of a wiping system according to an exemplary embodiment of the present invention; and Fig.2 is a vertical cross section view of the wiping system shown in Fig.1.

As shown in Figs. 1-2, in an embodiment, the wiping system is adapted to wipe a front end face of a fiber optic ferrule, so as to clean off dust and contamination from the front end face of the fiber optic ferrule.

As shown in Figs. 1-2, in an embodiment, the wiping system mainly comprises a support table 210, a conveying unit, a carrier holding device, a carrier pressing device, and a first base 101.

As shown in Figs. 1-2, in an embodiment, the conveying unit is configured to convey a wiping belt 400 onto the support table 210. The carrier holding device is configured to hold a carrier 10 on which a plurality of fiber optic ferrules 11 are mounted. The carrier pressing device is configured to press the carrier 10 on the support table 210, so that a front end faces of the fiber optic ferrules 11 mounted on the carrier 10 directly contact the wiping belt 400 on the support table 210. The support table 210 is fixed on the first base 101.

As shown in Figs. 1-2, in an embodiment, the carrier holding device and the carrier pressing device are slidably mounted on the first base 101, so that the carrier 10 pressed on the support table 210 is movable back and forth relative to the support table 210 in a first horizontal direction, so as to wipe the front end faces of the fiber optic ferrules 11 by means of the wiping belt 400 on the support table 210.

As shown in Figs. 1-2, in an embodiment, when the carrier 10 is driven to move back and forth relative to the support table 210 in the first horizontal direction, the front end faces of the fiber optic ferrules 11 are wiped by the wiping belt 400 carried on the support table 210. In this way, it may clean off the dust and contamination from the front end faces of the fiber optic ferrules 11.

As shown in Figs.1-2, in an embodiment, a first rail 141 extending in the first horizontal direction and a first sliding block 142 matched with the first rail 141 are provided on the first base 101. The carrier holding device and the carrier pressing device are mounted on the first sliding block 142, so as to slide along the first rail 141 together with the first sliding block 142.

As shown in Figs. 1-2, in an embodiment, the wiping system may further comprise a driving mechanism (not shown) adapted to drive the first sliding block 142 to slide along the first rail 141. The driving mechanism may be a gas cylinder, a hydraulic cylinder or a linear actuator.

As shown in Figs. 1-2, in an embodiment, the conveying unit mainly comprises: a driven shaft 120 on which an unused portion, which does not wipe the fiber optic ferrules, of the wiping belt 400 is wound; a driving shaft 110 on which an used portion, which wiped the fiber optic ferrules of the wiping belt 400 is wound; a plurality of tightening rollers 131, 132 adapted to tighten the wiping belt 400 arranged between the driven shaft 120 and the driving shaft 110; and a driver 111 adapted to drive the driving shaft 110 to rotate.

As shown in Figs. 1-2, in an embodiment, the support table 210 is located between the driving shaft 110 and the driven shaft 120. When the driving shaft 110 is rotated by the driver 111, the unused wiping belt 400 is released from the driven shaft 120 and is conveyed to the support table 210 to wipe the fiber optic ferrules, and the used wiping belt 400 is wound on the driving shaft 110.

As shown in Figs. 1-2, in an embodiment, the conveying unit may further comprise a damper 121 coupled to the driven shaft 120 and adapted to exerted a damping moment to the driven shaft 120, so as to prevent the driven shaft 120 from being rotated due to a pulling force produced during wiping the fiber optic ferrules 11, and ensure the wiping belt 400 on the support table 210 to be kept in a static state during wiping the fiber optic ferrules 11. That is, during the wiping belt 400 is wiping the fiber optic belt 11, the driving shaft 110, the driven shaft 120 and the wiping belt 400 are kept in the static state, only the carrier 10 and the fiber optic ferrules 11 thereon are moved.

As shown in Figs. 1-2, in an embodiment, the damping moment exerted by the damper 121 may be adjustable according to an actual friction force produced during wiping the fiber optic ferrules.

As shown in Figs. 1-2, in an embodiment, the driver 111 for driving the driving shaft 110 to rotate is fixedly mounted on the first base 101. The wiping system further comprises a second base 102 on which the driven shaft 120 and the damper 121 are slidably mounted.

As shown in Figs.1-2, in an embodiment, a second rail (not shown) extending in a second horizontal direction perpendicular to the first horizontal direction and a second sliding block 152 mated with the second rail are provided on the second base 102. The driven shaft 120 and the damper 121 are mounted on the second sliding block 152, so as to slide along the second rail together with the second sliding block 152.

As shown in Figs. 1-2, in an embodiment, the wiping system may further comprise a deviation correcting device configured to prevent the conveyed wiping belt 400 from being deviated from a predetermined position in the second horizontal direction.

As shown in Figs. 1-2, in an embodiment, the deviation correcting device mainly comprises: a position sensor 123 adapted to detect an actual position of the conveyed wiping belt 400 in the second horizontal direction; and a position adjusting mechanism 122 configured to adjust the position of the driven shaft 120 based on an error between the actual position and the predetermined position of the wiping belt 400 until the error is equal to zero.

As shown in Figs. 1-2, in an embodiment, the position adjusting mechanism 122 is mounted on the second base 102 and connected to the second sliding block 152, so as to drive the second sliding block 152 to slide along the second rail in the second horizontal direction. In this way, it may adjust the position of the wiping belt 400 in the second horizontal direction.

As shown in Figs.1-2, in an embodiment, the plurality of tightening rollers 131, 132 comprise a first tightening roller 131 supported on the first base 101 and a second tightening roller 132 supported on the second base 102. Please be noted that the number of the tightening rollers 131, 132 is not limited to two shown in the illustrated embodiment, the number of the tightening rollers 131, 132 may be three or more as necessary.

As shown in Figs. 1-2, in an embodiment, the driving shaft 110 comprises an inner shaft connected to an output shaft of the driver 111 and an outer tube sleeved on the inner shaft. The inner shaft and the outer tube are detachably locked together by a locking member 112. Similarly, the driven shaft 120 may comprise an inner shaft and an outer tube sleeved on the inner shaft. The inner shaft and the outer tube of the driven shaft 120 may be detachably locked together by a locking member. By using the driving shaft 110 and the driven shaft 120 with such configuration, it is easy to replace the wiping belt 400.

As shown in Figs. 1-2, in an embodiment, the carrier holding device mainly comprises: a carrier holder 260 configured to hold the carrier 10 thereon; and a lift mechanism 270 configured to move the carrier holder 260 up and down in a vertical direction.

As shown in Figs. 1-2, in an embodiment, the carrier pressing device mainly comprises: a pressing head 230 adapted to be pressed on the carrier holder 260; and a force exerting mechanism 280 adapted to exert a predetermined pressing force on the pressing head 230.

As shown in Figs. 1-2, in an embodiment, the carrier pressing device may further comprise a pressure sensor 240 provided between the pressing head 230 and the force exerting mechanism 280 and adapted to detect a pressing force exerted by the force exerting mechanism 280.

As shown in Figs. 1-2, in an embodiment, a pressing plate 250 is provided on an end of the force exerting mechanism 280, and the pressure sensor 240 is provided between the pressing plate 250 and the pressing head 230, such that the pressing force exerted by the force exerting mechanism 280 is transferred onto the pressing head 230 through the pressing plate 250 and the pressure sensor 240.

As shown in Figs. 1-2, in an embodiment, the lift mechanism 270 and the force exerting mechanism 280 are mounted on the first sliding block 142.

As shown in Figs. 1-2, in an embodiment, the wiping system further comprises a support frame 220 mounted on the first sliding block 142. The force exerting mechanism 280 is connected to the support frame 220.

As shown in Figs. 1-2, in an embodiment, the wiping system may further comprise a cleaning liquid injection device configured to spray a cleaning liquid (for example, alcohol) onto the wiping belt 400 on the support table 210.

As shown in Figs.1-2, in an embodiment, the cleaning liquid injection device mainly comprises: a support bracket 330 mounted on the first sliding block 142; a cleaning liquid spray head 310 mounted on the support bracket 330; and a spray head driver 320 adapted to drive the cleaning liquid spray head 310 to spray the cleaning liquid to the wiping belt 400.

It should be appreciated for those skilled in this art that the above embodiments are intended to be illustrated, and not restrictive. For example, many modifications may be made to the above embodiments by those skilled in this art, and various features described in different embodiments may be freely combined with each other without deviating from the invention as defined by the claims.

Although several exemplary embodiments have been shown and described, it would be appreciated by those skilled in the art that various changes or modifications may be made in these embodiments without departing from the scope of the invention which is defined in the claims.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A wiping system, comprising:
a support table (210);
a conveying unit configured to convey a wiping belt (400) onto the support table (210);
a carrier holding device configured to hold a carrier (10) on which a plurality of fiber optic ferrules (11) are mounted;
a carrier pressing device configured to press the carrier (10) on the support table (210), so that a front end faces of the fiber optic ferrules (11) mounted on the carrier (10) directly contact the wiping belt (400) on the support table (210); and
a first base (101) constructed to mount the support table (210), wherein the carrier holding device and the carrier pressing device are slidably mounted on the first base (101), so that the carrier (10) pressed on the support table (210) is movable back and forth relative to the support table (210) in a first horizontal direction, so as to wipe the front end faces of the fiber optic ferrules (11) by the wiping belt (400) on the support table (210).

2. The wiping system according to claim 1,
wherein a first rail (141) extending in the first horizontal direction and a first sliding block (142) matched with the first rail (141) are provided on the first base (101); and
wherein the carrier holding device and the carrier pressing device are mounted on the first sliding block (142), so as to slide along the first rail (141) together with the first sliding block (142).

3. The wiping system according to claim 1 or 2, wherein the conveying unit comprises:
a driven shaft (120) on which an unused portion of the wiping belt (400) is wound;
a driving shaft (110) on which an used portion of the wiping belt (400) is wound;
a plurality of tightening rollers (131, 132) adapted to tighten the wiping belt (400) between the driven shaft (120) and the driving shaft (110); and
a driver (111) adapted to drive the driving shaft (110) to rotate,
wherein the support table (210) is located between the driving shaft (110) and the driven shaft (120),
wherein when the driving shaft (110) is rotated by the driver (111), the unused wiping belt (400) is released from the driven shaft (120) and is conveyed onto the support table (210), and the used wiping belt (400) is wound on the driving shaft (110).

4. The wiping system according to claim 3, wherein the conveying unit further comprises:
a damper (121) connected to the driven shaft (120) and adapted to exerted a damping moment to the driven shaft (120), so as to prevent the driven shaft (120) from being rotated due to a pulling force produced during wiping the fiber optic ferrules (11), so that the wiping belt (400) on the support table (210) is kept in a static state during wiping the fiber optic ferrules (11).

5. The wiping system according to claim 4,
wherein the driver (111) for driving the driving shaft (110) to rotate is fixedly mounted on the first base (101); and
wherein the wiping system further comprises a second base (102) constructed to slidably mount the driven shaft (120) and the damper (121) thereon.

6. The wiping system according to claim 5,
wherein a second rail extending in a second horizontal direction perpendicular to the first horizontal direction and a second sliding block (152) mated with the second rail are provided on the second base (102); and
wherein the driven shaft (120) and the damper (121) are mounted on the second sliding block (152), so as to slide along the second rail together with the second sliding block (152).

7. The wiping system according to claim 6, further comprising:
a deviation correcting device configured to prevent the conveyed wiping belt (400) from being deviated from a predetermined position in the second horizontal direction.

8. The wiping system according to claim 7, wherein the deviation correcting device comprises:
a position sensor (123) adapted to detect an actual position of the conveyed wiping belt (400) in the second horizontal direction; and
a position adjusting mechanism (122) configured to adjust the position of the driven shaft (120) based on an error between the actual position and the predetermined position of the wiping belt (400) until the error is equal to zero,
wherein the position adjusting mechanism (122) is preferably mounted on the second base (102) and connected to the second sliding block (152), so as to drive the second sliding block (152) to slide along the second rail.

9. The wiping system according to claim 8,
wherein the plurality of tightening rollers (131, 132) comprise a first tightening roller (131) supported on the first base (101) and a second tightening roller (132) supported on the second base (102).

10. The wiping system according to any one of claims 3 to 9,
wherein the driving shaft (110) comprises an inner shaft connected to an output shaft of the driver (111) and an outer tube sleeved on the inner shaft; and
wherein the inner shaft and the outer tube are detachably locked together by a locking member (112).

11. The wiping system according to claim 2, **characterized by** at least one of the following:
a) further comprising a driving mechanism configured to drive the first sliding block (142) to slide along the first rail (141);
b) the carrier holding device comprises:
a carrier holder (260) configured to hold the carrier (10) thereon; and
a lift mechanism (270) configured to move the carrier holder (260) up and down in a vertical direction; and
c) the carrier pressing device comprises:
a pressing head (230) adapted to be pressed on the carrier holder (260); and
a force exerting mechanism (280) adapted to exert a predetermined pressing force on the pressing head (230).

12. The wiping system according to claim 11, item c, wherein the carrier pressing device further comprises:
a pressure sensor (240) provided between the pressing head (230) and the force exerting mechanism (280) and adapted to detect a pressing force exerted by the force exerting mechanism (280),
wherein preferably a pressing plate (250) is provided on an end of the force exerting mechanism (280), and the pressure sensor (240) is provided between the pressing plate (250) and the pressing head (230), such that the pressing force exerted by the force exerting mechanism (280) is transferred onto the pressing head (230) through the pressing plate (250) and the pressure sensor (240).

13. The wiping system according to claim 12,
wherein the lift mechanism (270) and the force exerting mechanism (280) are mounted on the first sliding block (142).

14. The wiping system according to claim 13, further comprising:
a support frame (220) mounted on the first sliding block (142),
wherein the force exerting mechanism (280) is connected to the support frame (220).

15. The wiping system according to any one of claims 2 to 14, further comprising:
a cleaning liquid injection device configured to spray a cleaning liquid onto the wiping belt (400) on the support table (210), wherein the cleaning liquid injection device preferably comprises:
a support bracket (330) mounted on the first sliding block (142);
a cleaning liquid spray head (310) mounted on the support bracket (330); and
a spray head driver (320) adapted to drive the cleaning liquid spray head (310) to spray the cleaning liquid to the wiping belt (400).

## Patentansprüche

1. Wisch-System, umfassend:
einen Auflagetisch (210);
eine Transportier-Einheit, die so ausgeführt ist, dass sie ein Wisch-Band (400) auf den Auflagetisch (210) transportiert;
eine Träger-Haltevorrichtung, die zum Halten eines Trägers (10) ausgeführt ist, auf dem eine Vielzahl von Faseroptik-Ferrulen (11) montiert sind;
eine Träger-Pressvorrichtung, die so ausgeführt ist, dass sie den Träger (10) auf dem Auflagetisch (210) so presst, dass vordere Endflächen der Faseroptik-Ferrulen (11), die auf dem Träger (10) montiert sind, direkt mit dem Wisch-Band (400) auf dem Auflagetisch (210) in Kontakt kommen; und
einen ersten Sockel (101), der zum Montieren des Auflagetischs (210) konstruiert ist,
wobei die Träger-Haltevorrichtung und die Träger-Pressvorrichtung verschiebbar an dem ersten Sockel (101) montiert sind, so dass der auf den Auflagetisch (210) gepresste Träger (10) relativ zu dem Auflagetisch (210) in einer ersten horizontalen Richtung hin- und herbewegt werden kann, um die vorderen Endflächen der Faseroptik-Ferrulen (11) mit dem Wisch-Band (400) auf dem Auflagetisch (210) abzuwischen.

2. Wisch-System nach Anspruch 1,
wobei eine erste Schiene (141), die sich in der ersten horizontalen Richtung erstreckt, und ein erster Gleitfuß (142), der mit der ersten Schiene (141) in Passung ist, an dem ersten Sockel (101) vorhanden sind; und
die Träger-Haltevorrichtung und die Träger-Pressvorrichtung an dem ersten Gleitfuß (142) so montiert sind, dass sie zusammen mit dem ersten Gleitfuß (142) entlang der ersten Schiene (141) gleiten.

3. Wisch-System nach Anspruch 1 oder 2, wobei die Transportier-Einheit umfasst:
eine angetriebene Welle (120), auf die ein unbenutzter Abschnitt des Wisch-Bandes (400) aufgewickelt ist;
eine antreibende Welle (110), auf die ein benutzter Abschnitt des Wisch-Bandes (400) aufgewickelt ist;
eine Vielzahl von Spannrollen (131, 132), die zum Spannen des Wisch-Bandes (400) zwischen der angetriebenen Welle (120) und der antreibenden Welle (110) eingerichtet sind; sowie
eine Antriebseinrichtung (111), die zum drehenden Antreiben der antreibenden Welle (110) eingerichtet ist,
wobei der Auflagetisch (210) zwischen der antreibenden Welle (110) und der angetriebenen Welle (120) angeordnet ist,
wobei, wenn die antreibende Welle (110) durch die Antriebseinrichtung (111) gedreht wird, das unbenutzte Wisch-Band (400) von der angetriebenen Welle (120) gelöst und auf den Auflagetisch (210) transportiert wird, und das benutzte Wisch-Band (400) auf die antreibende Welle (110) aufgewickelt wird.

4. Wisch-System nach Anspruch 3, wobei die Transportier-Einheit des Weiteren umfasst:
einen Dämpfer (121), der mit der angetriebenen Welle (120) verbunden und so eingerichtet ist, dass er ein Dämpfmoment auf die angetriebene Welle (120) ausübt, um zu verhindern, dass die angetriebene Welle (120) aufgrund einer Zugkraft gedreht wird, die beim Wischen der Faseroptik-Ferrulen (11) erzeugt wird, so dass das Wisch-Band (400) auf dem Auflagetisch (210) beim Wischen der Faseroptik-Ferrulen (11) in einem statischen Zustand gehalten wird.

5. Wisch-System nach Anspruch 4,
wobei die Antriebseinrichtung (111) zum drehenden Antreiben der antreibenden Welle (110) fest an dem ersten Sockel (101) montiert ist; und
das Wisch-System des Weiteren einen zweiten Sockel (102) umfasst, der zum verschiebbaren Montieren der angetriebenen Welle (120) und des Dämpfers (121) daran konstruiert ist.

6. Wisch-System nach Anspruch 5,
wobei eine zweite Schiene, die sich in einer zweiten horizontalen Richtung senkrecht zu der ersten horizontalen Richtung erstreckt, und ein zweiter Gleitfuß (152), der mit der zweiten Schiene in Passung ist, an dem zweiten Sockel (102) vorhanden sind; und
die angetriebene Welle (120) und der Dämpfer (121) an dem zweiten Gleitfuß (152) so montiert sind, dass sie zusammen mit dem zweiten Gleitfuß (152) an der zweiten Schiene entlang gleiten.

7. Wisch-System nach Anspruch 6, das des Weiteren umfasst:
eine Vorrichtung zum Korrigieren von Abweichung, die so ausgeführt ist, dass sie verhindert, dass das transportierte Wisch-Band (400) von einer vorgegebenen Position in der zweiten horizontalen Richtung abweicht.

8. Wisch-System nach Anspruch 7, wobei die Vorrichtung zum Korrigieren von Abweichung umfasst:
einen Positions-Sensor (123), der zum Erfassen einer Ist-Position des transportierten Wisch-Bandes (400) in der zweiten horizontalen Richtung eingerichtet ist; und
einen Mechanismus (122) zum Regulieren einer Position, der so ausgeführt ist, dass er die Position der angetriebenen Welle (120) auf Basis einer Abweichung zwischen der Ist-Position und der vorgegebenen Position des Wisch-Bandes (400) reguliert, bis der Fehler gleich Null ist,
wobei der Mechanismus (122) zum Regulieren einer Position vorzugsweise an dem zweiten Sockel (102) montiert und mit dem zweiten Gleitfuß (152) verbunden ist, um den zweiten Gleitfuß (152) zum Gleiten entlang der zweiten Schiene anzutreiben.

9. Wisch-System nach Anspruch 8,
wobei die Vielzahl von Spannrollen (131, 132) eine erste Spannrolle (131), die an dem ersten Sockel (101) gelagert ist, und eine zweite Spannrolle (132) umfasst, die an dem zweiten Sockel (102) gelagert ist.

10. Wisch-System nach einem der Ansprüche 3 bis 9,
wobei die antreibende Welle (110) eine innere Welle, die mit einer Ausgangswelle der Antriebseinrichtung (111) verbunden ist, sowie eine äußere Röhre umfasst, die auf die innere Welle aufgeschoben ist; und
wobei die innere Welle und die äußere Röhre mittels eines Verriegelungselementes (112) lösbar miteinander verriegelt sind.

11. Wisch-System nach Anspruch 2, **dadurch gekennzeichnet, dass**:
a) es des Weiteren einen Antriebsmechanismus umfasst, der so ausgeführt ist, dass er den ersten Gleitfuß (142) zum Gleiten entlang der ersten Schiene (141) antreibt;
b) die Träger-Haltevorrichtung umfasst:
einen Träger-Halter (260), der zum Halten des Trägers (10) daran ausgeführt ist; sowie
einen Hebemechanismus (270), der so ausgeführt ist, dass er den Trägerhalter (260) in einer vertikalen Richtung nach oben und nach unten bewegt; und
c) die Träger-Pressvorrichtung umfasst:
einen Press-Kopf (230), der so eingerichtet ist, dass er an den Trägerhalter (260) gepresst wird; sowie
einen Mechanismus (280) zum Ausüben von Kraft, der zum Ausüben einer vorgegebenen Presskraft auf den Press-Kopf (230) eingerichtet ist.

12. Wisch-System nach Anspruch 11, Punkt c, wobei die Träger-Pressvorrichtung des Weiteren umfasst:
einen Drucksensor (240), der zwischen dem Press-Kopf (230) und dem Mechanismus (280) zum Ausüben von Kraft vorhanden ist und zum Erfassen einer von dem Mechanismus (280) zum Ausüben von Kraft ausgeübten Presskraft eingerichtet ist,
wobei vorzugsweise eine Press-Platte (250) an einem Ende des Mechanismus (280) zum Ausüben von Kraft vorhanden ist, und der Drucksensor (240) zwischen der Press-Platte (250) und dem Press-Kopf (230) vorhanden ist, so dass die von dem Mechanismus (280) zum Ausüben von Kraft ausgeübte Presskraft über die Press-Platte (250) und den Drucksensor (240) auf den Press-Kopf (230) übertragen wird.

13. Wisch-System nach Anspruch 12,
wobei der Hebemechanismus (270) und der Mechanismus (280) zum Ausüben von Kraft an dem ersten Gleitfuß (142) montiert sind.

14. Wisch-System nach Anspruch 13, das des Weiteren umfasst:
einen Stützrahmen (220), der an dem ersten Gleitfuß (142) montiert ist,
wobei der Mechanismus (280) zum Ausüben von Kraft mit dem Stützrahmen (220) verbunden ist.

15. Wisch-System nach einem der Ansprüche 2 bis 14, das des Weiteren umfasst:
eine Vorrichtung zum Aufspritzen von Reinigungsflüssigkeit, die so ausgeführt ist, dass sie eine Reinigungsflüssigkeit auf das Wisch-Band (400) auf dem Auflagetisch (210) aufspritzt, wobei die Vorrichtung zum Aufspritzen von Reinigungsflüssigkeit vorzugsweise umfasst:
einen Stützträger (330), der an dem ersten Gleitfuß (142) montiert ist,
einen Kopf (310) zum Aufspritzen von Reinigungsflüssigkeit, der an dem Stützträger (330) montiert ist; und
eine Vorrichtung (320) zum Antreiben des Aufspritz-Kopfes, die so eingerichtet ist, dass sie den Kopf (310) zum Aufspritzen von Reinigungsflüssigkeit zum Aufspritzen der Reinigungsflüssigkeit auf das Wisch-Band (400) antreibt.

## Revendications

1. Système d'essuyage, comprenant :
une table de soutien (210) ;
une unité de transport configurée pour transporter une bande d'essuyage (400) sur la table de soutien (210) ;
un dispositif porte-support configuré pour porter un support (10) sur lequel une pluralité de ferrules de fibre optique (11) sont montées ;
un dispositif de pression de support configuré pour presser le support (10) sur la table de soutien (210), de sorte que des faces d'extrémité avant des ferrules de fibre optique (11) montées sur le support (10) entrent directement en contact avec la bande d'essuyage (400) sur la table de soutien (210) ; et
une première base (101) construite pour monter la table de soutien (210),
dans lequel le dispositif porte-support et le dispositif de pression de support sont montés en coulissement sur la première base (101), de sorte que le support (10) pressé sur la table de soutien (210) soit mobile en va-et-vient par rapport à la table de soutien (210) dans une première direction horizontale, de manière à essuyer les faces d'extrémité avant des ferrules de fibre optique (11) par la bande d'essuyage (400) sur la table de soutien (210).

2. Système d'essuyage selon la revendication 1,
dans lequel un premier rail (141) s'étendant dans la première direction horizontale et un premier bloc coulissant (142) correspondant au premier rail (141) sont prévus sur la première base (101) ; et
dans lequel le dispositif porte-support et le dispositif de pression de support sont montés sur le premier bloc coulissant (142), de manière à coulisser le long du premier rail (141) conjointement avec le premier bloc coulissant (142).

3. Système d'essuyage selon la revendication 1 ou 2, dans lequel l'unité de transport comprend :
un arbre entraîné (120) sur lequel une partie non utilisée de la bande d'essuyage (400) est enroulée ;
un arbre d'entraînement (110) sur lequel une partie utilisée de la bande d'essuyage (400) est enroulée ;
une pluralité de rouleaux de serrage (131, 132) adaptés pour serrer la bande d'essuyage (400) entre l'arbre entraîné (120) et l'arbre d'entraînement (110) ; et
un dispositif d'entraînement (111) adapté pour entraîner en rotation l'arbre d'entraînement (110),
dans lequel la table de soutien (210) est située entre l'arbre d'entraînement (110) et l'arbre entraîné (120),
dans lequel, lorsque l'arbre d'entraînement (110) est mis en rotation par le dispositif d'entraînement (111), la bande d'essuyage non utilisée (400) est libérée de l'arbre entraîné (120) et est transportée sur la table de soutien (210), et la bande d'essuyage utilisée (400) est enroulée sur l'arbre d'entraînement (110).

4. Système d'essuyage selon la revendication 3, dans lequel l'unité de transport comprend en outre :
un amortisseur (121) relié à l'arbre entraîné (120) et adapté pour appliquer un moment d'amortissement à l'arbre entraîné (120), de manière à empêcher l'arbre entraîné (120) de tourner en raison d'une force de traction produite pendant l'essuyage des ferrules de fibre optique (11), afin que la bande d'essuyage (400) sur la table de soutien (210) soit maintenue dans un état statique pendant l'essuyage des ferrules de fibre optique (11).

5. Système d'essuyage selon la revendication 4,
dans lequel le dispositif d'entraînement (111) destiné à entraîner en rotation l'arbre d'entraînement (110) est monté de manière fixe sur la première base (101) ; et
dans lequel le système d'essuyage comprend en outre une deuxième base (102) construite pour monter en coulissement l'arbre entraîné (120) et l'amortisseur (121) sur celle-ci.

6. Système d'essuyage selon la revendication 5,
dans lequel un deuxième rail s'étendant dans une deuxième direction horizontale perpendiculaire à la première direction horizontale et un deuxième bloc coulissant (152) accouplé au deuxième rail sont prévus sur la deuxième base (102) ; et
dans lequel l'arbre entraîné (120) et l'amortisseur (121) sont montés sur le deuxième bloc coulissant (152), de manière à coulisser le long du deuxième rail conjointement avec le deuxième bloc coulissant (152).

7. Système d'essuyage selon la revendication 6, comprenant en outre :
un dispositif de correction de déviation configuré pour empêcher la bande d'essuyage transportée (400) d'être déviée d'une position prédéterminée dans la deuxième direction horizontale.

8. Système d'essuyage selon la revendication 7, dans lequel le dispositif de correction de déviation comprend :
un capteur de position (123) adapté pour détecter une position réelle de la bande d'essuyage transportée (400) dans la deuxième direction horizontale ; et
un mécanisme de réglage de position (122) configuré pour régler la position de l'arbre entraîné (120) sur la base d'une erreur entre la position réelle et la position prédéterminée de la bande d'essuyage (400) jusqu'à ce que l'erreur soit égale à zéro,
dans lequel le mécanisme de réglage de position (122) est de préférence monté sur la deuxième base (102) et relié au deuxième bloc coulissant (152), de manière à entraîner le deuxième bloc coulissant (152) en coulissement le long du deuxième rail.

9. Système d'essuyage selon la revendication 8,
dans lequel la pluralité de rouleaux de serrage (131, 132) comprennent un premier rouleau de serrage (131) soutenu sur la première base (101) et un deuxième rouleau de serrage (132) soutenu sur la deuxième base (102).

10. Système d'essuyage selon l'une quelconque des revendications 3 à 9, dans lequel l'arbre d'entraînement (110) comprend un arbre interne relié à un arbre de sortie du dispositif d'entraînement (111) et un tube externe emmanché sur l'arbre interne ; et
dans lequel l'arbre interne et le tube externe sont verrouillés ensemble de manière amovible par un élément de verrouillage (112).

11. Système d'essuyage selon la revendication 2, **caractérisé par** au moins l'un des points suivants :
a) comprenant en outre un mécanisme d'entraînement configuré pour entraîner le premier bloc coulissant (142) en coulissement le long du premier rail (141);
b) le dispositif porte-support comprend :
un porte-support (260) configuré pour porter le support (10) sur celui-ci ; et
un mécanisme de levage (270) configuré pour déplacer le porte-support (260) vers le haut et vers le bas dans une direction verticale ; et
c) le dispositif de pression de support comprend :
une tête de pression (230) adaptée pour être pressée sur le porte-support (260) ; et
un mécanisme d'application de force (280) adapté pour appliquer une force de pression prédéterminée sur la tête de pression (230).

12. Système d'essuyage selon la revendication 11, point c, dans lequel le dispositif de pression de support comprend en outre :
un capteur de pression (240) prévu entre la tête de pression (230) et le mécanisme d'application de force (280) et adapté pour détecter une force de pression appliquée par le mécanisme d'application de force (280),
dans lequel de préférence une plaque de pression (250) est prévue sur une extrémité du mécanisme d'application de force (280), et le capteur de pression (240) est prévu entre la plaque de pression (250) et la tête de pression (230), de sorte que la force de pression appliquée par le mécanisme d'application de force (280) soit transférée sur la tête de pression (230) à travers la plaque de pression (250) et le capteur de pression (240).

13. Système d'essuyage selon la revendication 12,
dans lequel le mécanisme de levage (270) et le mécanisme d'application de force (280) sont montés sur le premier bloc coulissant (142).

14. Système d'essuyage selon la revendication 13, comprenant en outre :
un cadre de soutien (220) monté sur le premier bloc coulissant (142),
dans lequel le mécanisme d'application de force (280) est relié au cadre de soutien (220).

15. Système d'essuyage selon l'une quelconque des revendications 2 à 14, comprenant en outre :
un dispositif d'injection de liquide de nettoyage configuré pour pulvériser un liquide de nettoyage sur la bande d'essuyage (400) sur la table de soutien (210), dans lequel le dispositif d'injection de liquide de nettoyage comprend de préférence :
une console de soutien (330) montée sur le premier bloc coulissant (142) ;
une tête de pulvérisation de liquide de nettoyage (310) montée sur la console de soutien (330) ; et
un dispositif d'entraînement de tête de pulvérisation (320) adapté pour entraîner la tête de pulvérisation de liquide de nettoyage (310) pour pulvériser le liquide de nettoyage sur la bande d'essuyage (400).
